# EUROPEAN PATENT APPLICATION

(11) **EP 4 054 048 A1**
(43) Date of publication of application: **07.09.2022**
(21) Application number: 21196750.0
(22) Date of filing: 15.09.2021
(51) Int. Cl.: H02J 3/38, F03D 7/02

(54) **POWER SYSTEM STABILIZER AND POWER SYSTEM STABILIZATION METHOD**

(30) Priority: 03.03.2021 JP 2021033899
(71) Applicant: Hitachi, Ltd., Tokyo 100-8280 (JP)
(72) Inventor: KURODA, Eisuke, Tokyo, 100-8280 (JP); KOKAI, Yutaka, Tokyo, 100-8280 (JP); YOSHIHARA, Tohru, Tokyo, 100-8280 (JP); HARAGUCHI, Ruriko, Tokyo, 100-8280 (JP)
(74) Representative: MERH-IP Matias Erny Reichl Hoffmann Patentanwälte PartG mbB

(57) **Abstract**

There is provided a power system stabilizer including a correction data generation unit that pre-generates correction data related to prediction of a frequency of a power system including a renewable energy resources power supply, based on a renewable energy resources power supply model that models an output of the renewable energy resources power supply and control system data of the renewable energy resources power supply; a predicted frequency generation unit that generates a frequency at the time of occurrence of an accident as a predicted frequency using the correction data; and a control amount computation unit that computes a control amount with respect to the power system using the predicted frequency that corresponds to the occurred accident at the time of occurrence of an accident.

## Description

### BACKGROUND OF THE INVENTION

### 1. Field of the Invention

The present invention relates to a power system stabilizer and a power system stabilization method.

### 2. Description of Related Art

JP-A-H10-108368 (Patent Literature 1) is a technology for adjusting a supply-demand imbalance caused by a system fault of a power system and stabilizing a frequency. This publication describes "a frequency stabilization method in which, in a case where transient maximum and minimum frequency values and a settling frequency are pre-obtained as characteristics of a supply-demand imbalance rate and frequency deviation based on a power generation amount in a system which is a control target before occurrence of system disruption and an interconnection power flow, the system disruption occurs in a power system, and an imbalance occurs between the generative power of a generator and load power consumption in a separated system, by using the characteristics of the supply-demand imbalance rate and the frequency deviation, the maximum value of the transient frequency rise is obtained when the generative power is excessive, the minimum value of the transient frequency drop is obtained when the generative power is insufficient, and the settling frequency is obtained, and when it is determined that the frequency values are out of a stable operation region of the generator, the frequency is controlled within the stable operation region of the generator by limiting power supply and load corresponding to each of the frequency values".

Further, there is JP-A-2011-19362 (Patent Literature 2) . This publication describes a problem in which "in a case where a main line is cut off due to a system accident, there are many uncertain factors in order to accurately balance demand and supply, but there is provided a system frequency stabilizer that can respond to these uncertain factors". As a solution, it is described that "the power system frequency stabilizer includes: means for constantly measuring an output of a generator in a system and a load power flow value of major substations; accident signal transmitting means for transmitting an accident signal to system frequency stabilizing means when an accident is detected; a control amount pre-computation unit that pre-calculates a control amount required at the time of occurrence of an accident in a system using an electric circuit model and online data in the system; and a correction control amount computation unit that computes a correction control amount based on observed values such as a generator dropout amount, a load dropout amount, and a system frequency change".

Further, there is JP-A-2013-225956 (Patent Literature 3) . This publication describes a problem in which "There is provided a system stabilization method capable of suppressing collapse of an independent separate system due to output fluctuation of natural energy power generation equipment in a case where the independent separate system occurs". As a solution, it is described that "a system stabilizer calculates a stabilization control amount, which is a control amount of a power flow for stabilizing the independent separate system, based on system information including a power flow of interconnection between a main system and a sub system of a power system, a power flow of a load connected to the sub system, and an output of a generator connected to the sub system, before occurrence of an event that causes the independent separate system. In addition, a control target is selected from the load and the generator such that the control amount of the power flow by a system stabilization process becomes a stabilization control amount, and the selected control target is registered in a control table in association with the event. In a case of selecting the load as a control target, the load, which is a control target, is selected based on installed capacity of the natural energy power generation equipment in the load or the natural energy equipment introduction amount expressed by the power flow or a fluctuation amount thereof from the natural energy power generation equipment".

As described in JP-A-H10-108368, the frequency stabilization method of the power system stabilizer of the related art pre-obtains the transient frequency maximum and minimum values and the settling frequency by using the characteristics of the supply-demand imbalance rate and the frequency deviation based on the power generation amount in the system, which is a control target, before the occurrence of system disruption and the interconnection power flow, calculates each frequency at the time of system disruption by using the characteristics, determines the required power supply limit amount (generator shedding amount) or the load limit amount (load shedding amount), and stabilizes the frequency.

As described in JP-A-2011-19362, the correction control amount for generator dropout or load dropout is calculated and controlled. As described in JP-A-2013-225956, the load which is a control target is calculated in consideration of the influence of the natural energy power generation equipment (renewable energy such as solar power generation or wind power generation) under load.

However, the frequency stabilization methods of the power system stabilizer of these related arts cannot reflect the control effect and influence of the renewable energy resources power supply such as virtual inertia control, and there is a problem that the amount of the main control (first stage control) cannot be set appropriately. When the main control amount is not appropriate, there is a concern that excess or deficiency of control occurs, the frequency is destabilized, or the amount of correction control after the main control increases.

In addition, while the increase in demand slows down or decreases, when the number of renewable energy resources power supplies interconnected to the power system via an inverter (power converter) increases, the interconnection ratio of synchronous generators decreases and the output of the renewable energy resources power supply fluctuates depending on the weather. Thus, the system frequency is more likely to fluctuate. Therefore, when the main control amount is not appropriate, there is a concern that excess or deficiency of control occurs, the frequency is destabilized, or the amount of correction control after the main control increases.

### SUMMARY OF THE INVENTION

The present invention has been made in view of the above-described circumstances, and an object thereof is to provide a power system stabilizer and a power system stabilization method for stabilizing a frequency of a power system including a renewable energy resources power supply.

In order to solve the above-described problem, for example, the configuration described in claims is employed. The present application includes a plurality of means for solving the above-described problems, but as an example, there is provided "a power system stabilizer including: a correction data generation unit that pre-generates correction data related to prediction of a frequency of a power system including a renewable energy resources power supply, based on a renewable energy resources power supply model that models an output of the renewable energy resources power supply and control system data of the renewable energy resources power supply; a predicted frequency generation unit that generates a frequency at the time of occurrence of an accident as a predicted frequency using the correction data; and a control amount computation unit that computes a control amount with respect to the power system using the predicted frequency that corresponds to the occurred accident at the time of occurrence of an accident".

According to the present invention, it is possible to stabilize the frequency of the power system including the renewable energy resources power supply. The problems, the configurations, and the effects other than those described above will be clarified by the description of the embodiments below.

### BRIEF DESCRIPTION OF THE DRAWINGS

FIG. 1 is a block diagram illustrating a hardware configuration of a power system stabilizer connected to a power system according to an example;
FIG. 2 is a block diagram illustrating a functional configuration of the power system stabilizer according to the example;
FIG. 3 is a flowchart illustrating mainly a renewable energy resources correction factor computation process of the power system stabilizer of FIG. 2;
FIG. 4 is a flowchart illustrating mainly a computation process of a predicted frequency with renewable energy resources correction and a stabilization control amount calculation process of the power system stabilizer of FIG. 2;
FIG. 5 is a flowchart illustrating mainly a control target determination process of the power system stabilizer of FIG. 2;
FIGS. 6A and 6B are views illustrating an example of calculation in consideration of a virtual inertia control function in a renewable energy resources correction factor computation unit and a unit for computing a predicted frequency with renewable energy resources correction in FIG. 2;
FIGS. 7A and 7B are views illustrating an example of calculation in which a power supply limit (generator shedding) and a load limit (load shedding) are combined with each other in FIG. 6; and
FIG. 8 is a view illustrating an example of calculation in a case of considering a frequency feedback function in the renewable energy resources correction factor computation unit and the unit for computing a predicted frequency with renewable energy resources correction in FIG. 2.

### DESCRIPTION OF EMBODIMENTS

One embodiment will be described with reference to the drawings. It should be noted that the embodiments described below do not limit the invention according to the claims, and all the elements and combinations thereof described in the embodiments are not essential for the means for solving the invention.

### [Example]

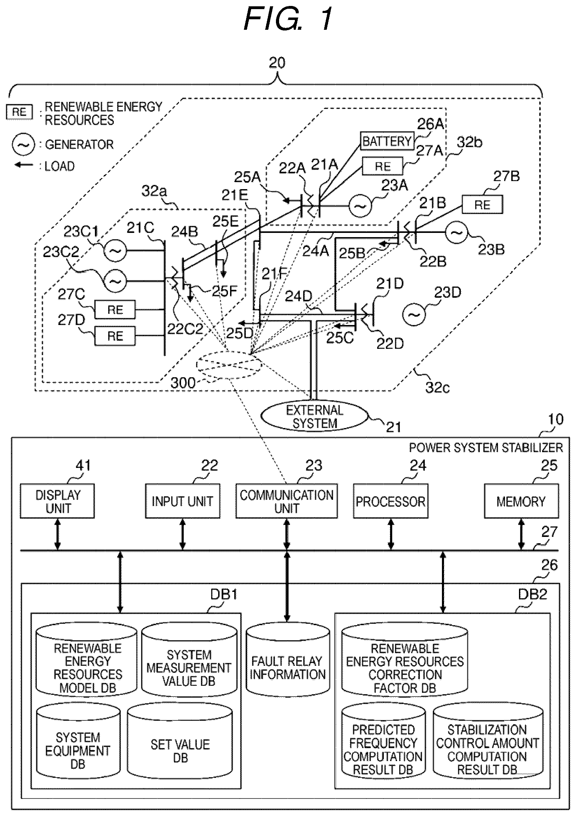

FIG. 1 is a block diagram illustrating a hardware configuration of a power system stabilizer connected to a power system according to an example.

In FIG. 1, the power system stabilizer 10 is configured with, for example, a computer system. The power system stabilizer 10 computes a renewable energy resources correction factor, a predicted frequency with renewable energy resources correction, and a stabilization control amount of a separate system (independent system) area 32 of a power system 20. At this time, the power system stabilizer 10 can provide a control amount in consideration of the influence of renewable energy resources in the separate system, and by using this control amount and issuing a control command at the time of occurrence of an accident, it becomes possible to stabilize the frequency and reduce the control amount when a supply-demand imbalance occurred according to the system fault.

In FIG. 1, an area 32a and an area 32b are included in an area 32c. For example, when a fault (accident) occurs in a state where the demand and supply balance is achieved in the area 32c and the area 32a becomes a separate system, it is necessary to achieve the demand and supply balance in the area 32a. Therefore, when the demand and supply of the area 32a are imbalanced at the time of occurrence of a fault, the control command is issued to achieve balance. The control amount according to this control command is pre-calculated by predicting a change in frequency for each possible fault, and the control amount corresponding to the actually occurred fault is used. At this time, since there is a possibility that control such as virtual inertia is performed with respect to the renewable energy resources, by correcting the predicted frequency in consideration of such control, the frequency can be stabilized efficiently even in the power system including the renewable energy resources power supply.

The power system stabilizer 10 illustrated in FIG. 1 includes a display unit 41, an input unit 42, a communication unit 43, a processor 44, a memory 45, and a storage device 46. The display unit 41, the input unit 42, the communication unit 43, the processor 44, the memory 45, and the storage device 46 are connected to each other via a bus 47.

The display unit 41 displays parameters handled by the power system stabilizer 10 and a processing result in the power system stabilizer 10. The display unit 41 may be a display device, or a printer device, a voice output device, or the like may be used together with the display device.

The input unit 42 inputs various conditions or the like for operating the power system stabilizer 10. The input unit 42 can use a keyboard, a mouse, and the like, and additionally, may include at least one of a touch panel, a voice instruction device, and the like.

The communication unit 43 has a circuit and a communication protocol for being connected to a communication network 300. The communication network 300 may be a wide area network (WAN) such as the Internet, a local area network (LAN) such as WiFi or Ethernet (registered trademark), or a mixture of WAN and LAN.

The processor 44 executes a computer program, and performs processes related to searching data in various databases stored in the storage device 46, giving an instruction for displaying the processing result, and computing the renewable energy resources correction factor, the predicted frequency, and the stabilization control amount of the power system 20. The processor 44 may be a central processing unit (CPU) or a graphics processing unit (GPU). The processor 44 may be a single core processor or a multi-core processor. The processor 44 may include a hardware circuit (for example, a field-programmable gate array (FPGA) or an application specific integrated circuit (ASIC)) that performs a part or all of the processes. The processor 44 may include a neural network. The processor 44 may be configured as one or a plurality of semiconductor chips, or may be configured as a computer device such as a calculation server.

The memory 45 is configured as, for example, a random access memory (RAM), stores a computer program and calculation result data, and provides a work area required for each process to the processor 44.

The storage device 46 is a storage device having a large storage capacity, and is, for example, a hard disk device or a solid state drive (SSD). The storage device 46 can store an executable file of various programs and data used for executing the program. For convenience, the data stored in the storage device 46 is referred to as an input system data group DB1 and an output system data group DB2. The input system data group DB1 includes a renewable energy resources model, system equipment, a system measurement value, a set value, and the like. The output system data group DB2 includes a renewable energy resources correction factor, a predicted frequency computation result, a stabilization control amount computation result, and the like. The storage device 46 can store a program for computing a renewable energy resources correction factor, a predicted frequency, and a stabilization control amount. The program for computing a renewable energy resources correction factor, a predicted frequency, and a stabilization control amount may be software that can be installed in the power system stabilizer 10 or may be incorporated as firmware in the power system stabilizer 10.

The input system data group DB1 stores, for example, one or more of a renewable energy resources model (a renewable energy resources model required for frequency stability analysis to obtain the frequency bottom or peak value in a separate system) DB of a converter or a control system thereof in a virtual inertia control (inertia control) of the renewable energy resources at the time of occurrence of a system fault or a large power supply dropout, system equipment DB configured with a system configuration (connection relationship of a bus, a line, a power supply, a load, a transformer, and one or more of each control devices in the system), line impedance (R + jX), earth capacity (admittance: Y), power supply data, and the like, a system measurement value DB including active power P, reactive power Q, voltage V, phase angle δ, current I, power factor Φ, tap value at each point of the system, and on/off information of a switch between the power system and node, branch, transformer, SC, or ShR, and a set value DB which is a specification such as a slack node and a convergence determination threshold for performing processes for renewable energy resources correction factor computation, predicted frequency computation, and stabilization control amount computation. The system equipment DB, the system measurement value DB (data with time stamp or PMU data may be used), and the set value DB may be obtained from a monitoring control device, a central power supply command center, or EMS, or may be manually input. When inputting the data manually, the data is manually input and stored by the input unit 42. Further, when inputting the data, necessary image data is generated by the processor 44 and displayed on the display unit 41. When inputting the data, by using a complementary function, the data may be input semi-manually such that a large amount of data can be set.

The output system data group DB2 stores one or more of a renewable energy resources correction factor DB which is a computation result of a renewable energy resources correction factor computation unit 11, a predicted frequency computation result DB which is a computation result of the unit for computing a predicted frequency with renewable energy resources correction 12, and a stabilization control amount computation result DB which is a computation result of a stabilization control amount computation/setting unit 13.

The power system stabilizer 10 can access the measurement information and the like of the power system 20 via the communication network 300. The power system 20 is a system in which a plurality of generators 23A to 23D and loads 25A to 25F are interconnected with each other via buses (nodes) 21A to 21F, transformers 22A to 22D, power transmission lines (branches) 24A to 24E, and the like. The generators 23A to 23D referred to here are, for example, a thermal power generator, a hydroelectric power generator, or a nuclear power generator. Various measuring instruments and circuit breakers for protecting, controlling and monitoring the power system 20 are installed in the nodes 21A to 21F. A battery 26A and renewable energy resources power supply 27A to 27D are connected to each of the nodes 21A to 21D. The renewable energy resources power supply 27A to 27D are power sources that are interconnected via inverters such as a photovoltaic generator, a solar thermal generator, a wind turbine, a wind farm, and a power flow power generator, and a power source interconnected via HVDC is also the renewable energy resources power supply.

The power system stabilizer 10 can access signals detected by the measuring instrument via the communication network 300 as necessary, acquire one or more of super vision (SV) data indicating the on/off state of the power transmission/transformation equipment and telemeter (TM) data indicating the active power P, the reactive power Q, the voltage V, and the current I, and store the acquired data in the system measurement value DB.

The processor 44 reads the program for computing a renewable energy resources correction factor, a predicted frequency, and a stabilization control amount from the memory 45, and executes the program for computing a renewable energy resources correction factor, a predicted frequency, and a stabilization control amount. Accordingly, the renewable energy resources correction factor, the predicted frequency with renewable energy resources correction, and the stabilization control amount of the separate system (independent system) area 32 are computed, and at the time of occurrence of a fault, based on fault relay information, it is determined which fault occurred. By using the control amount with respect to this fault and issuing a control command, it becomes possible to stabilize the frequency and reduce the control amount when a supply-demand imbalance occurs according to the system fault.

Execution of the program for computing a renewable energy resources correction factor, a predicted frequency, and a stabilization control amount may be shared by a plurality of processors or computers. Otherwise, the processor 44 may instruct a cloud computer or the like to execute all or a part of the program for computing a renewable energy resources correction factor, a predicted frequency, and a stabilization control amount via the communication network 300, and receive the execution result.

In FIG. 1, an example in which the power system stabilizer 10 holds the renewable energy resources model/system equipment/system measurement value/set value database DB1 and the renewable energy resources correction factor/predicted frequency computation result/stabilization control amount computation result database DB2 is illustrated, but at least one of the databases may be held in the cloud server.

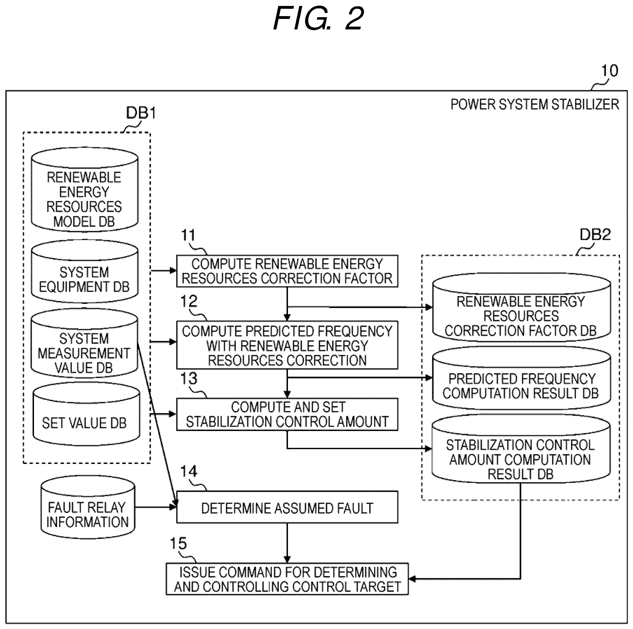

FIG. 2 is a block diagram illustrating a functional configuration of the power system stabilizer according to Example 1. In the following description, in a case where the operating subject is described as "... unit is", the processor 44 in FIG. 1 realizes a function of the ... unit by reading ... unit which is a program after loading dynamic random access memory (DRAM).

In FIG. 2, the power system stabilizer 10 includes the input system data group DB1, the output system data group DB2, the renewable energy resources correction factor computation unit 11, the unit for computing a predicted frequency with renewable energy resources correction 12, the stabilization control amount computation/setting unit 13, an assumed fault determination unit 14, a control target determination/control command unit 15, and the display unit 41.

The renewable energy resources correction factor computation unit 11 uses one or more of the renewable energy resources model/system equipment/system measurement value/set value data as an input to compute the renewable energy resources correction factor with respect to the operating state of the renewable energy resources, such as what type of frequency change occurs in each of the areas in a case where a fault of each separate system (independent system) occurred or how much the frequency bottom or peak value is corrected by controlling a virtual inertia (VI) of the renewable energy resources, or the like by transient stability analysis or frequency analysis, and outputs the computed renewable energy resources correction factor to the unit for computing a predicted frequency with renewable energy resources correction.

The unit for computing a predicted frequency with renewable energy resources correction 12 corrects and computes the frequency bottom or peak value in the predicted frequency computation by using the renewable energy resources correction factor, based on the renewable energy resources correction factor and one or more of the renewable energy resources model/system equipment/system measurement value/set value data, and outputs the computed value to the stabilization control amount computation/setting unit 13.

The stabilization control amount computation/setting unit 13 can compute the control amount in consideration of the influence of the renewable energy resources in the separate system based on the predicted frequency with renewable energy resources correction calculated by the unit for computing a predicted frequency with renewable energy resources correction 12, and one or more of the renewable energy resources model/system equipment/system measurement value/set value data.

The assumed fault determination unit 14 reads the fault relay information, associates the fault that actually occurred in the power system with the assumed fault, and outputs the result to the control target determination/control command unit 15.

The control target determination/control command unit 15 can stabilize the frequency and reduce the control amount when the supply-demand imbalance occurs according to the system fault, by the control command at the time of occurrence of a fault based on one or more of the control amount for each fault computed by the stabilization control amount computation/setting unit 13, the system equipment (including the control target data)/system measurement value (including the interconnection power flow) /set value data, and the fault information output from the assumed fault determination unit 14.

The display unit 41 displays various calculation results and the contents of the database.

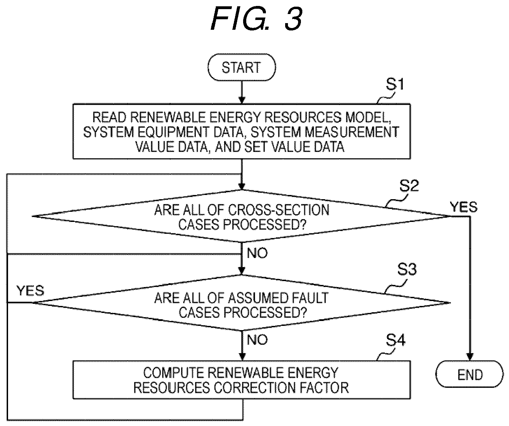

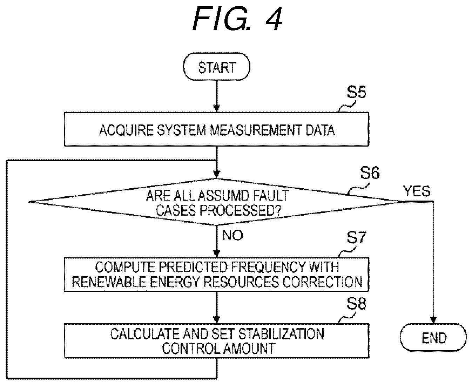

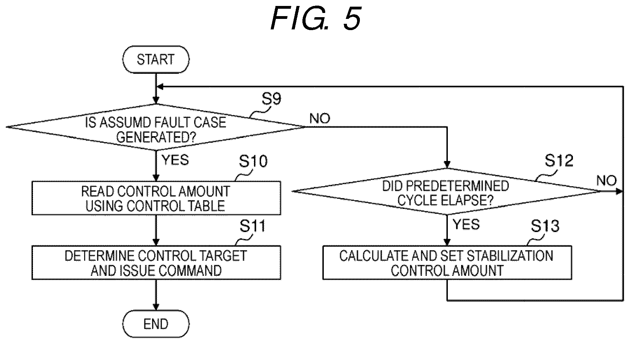

FIGS. 3, 4, and 5 are flowcharts illustrating a process of the power system stabilizer of FIG. 2. FIG. 3 is a flow for computing the renewable energy resources correction factor, and illustrates an order of calculation at a certain cycle or at any timing of the operator, and computation of the renewable energy resources correction factor with respect to the operating state of the renewable energy resources in each assumed fault. FIG. 4 illustrates a flow of the predicted frequency computation in consideration of the renewable energy resources correction factor at the time of occurrence of each assumed fault case, which is performed at a certain cycle, and stabilization control amount calculation and setting. Here, the certain cycle may be the same as that in FIG. 3 or may be different. FIG. 5 illustrates a flow of determining whether or not the assumed fault occurred by using the fault relay information as a trigger, determining the control target with reference to the table of the stabilization control amount, and issuing a command. In a case where there is no fault in FIG. 5, the process proceeds to the stabilization control amount calculation and setting in FIG. 4 when a predetermined cycle elapsed.

Hereinafter, the detailed processes of each step will be described below.

In step S1 of FIG. 3, the renewable energy resources model (including the virtual inertia control model of the renewable energy resources, the frequency feedback function model, and the like) and the system equipment/system measurement value/set value data are read into the memory, and the process proceeds to step S2. Here, system power flow cross-section data used in step S4 is created by using the system measurement value data, the system equipment data, and the set value data which are read in step S1. The system power flow cross-section data can also be created by obtaining shortage information by state estimation and power flow calculation. Here, the state estimation and the power flow calculation are supplemented. By using the system measurement data, the system equipment data, and the calculation setting data, by the calculation of the state estimation calculation/power flow calculation program (not illustrated), the system state at the time of system measurement is calculated and stored in the system measurement database. The state estimation calculation means a calculation function of determining the presence or absence of abnormal data in the observation data, removing the abnormal data, and estimating the plausible system state in a specific time section, based on the observation data and connection data of power transmission and distribution equipment such as the substation, the power station, and the power-transmission line. Here, the state estimation calculation may use any technology of the related art. In the power flow calculation, by using the voltage V of each node and the output command values P and Q of the load required for the power flow calculation of the state estimation result, system equipment data, and calculation setting data, the generator node, the synchronous phase adjuster, and the reactive power compensator in the power system are PV-designated, the substation node and the load node are PQ-designated, the node voltage V and the phase angle θ preset for the slack node preset in the power system are designated, and along with the admittance matrix Yij created from the system database, the power flow calculation is performed using a Newton-Rapson method, and the calculation results are stored. The power flow calculation method is based on the AC method.

In step S2, it is determined whether or not all the system power flow cross-section data read in step S1 were calculated, and in a case where the calculation is finished, the process is completed, and in a case where there are non-calculated cases, the process proceeds to step S3.

In step S3, it is determined whether or not all the assumed fault data of the system read in step S1 were calculated, and in a case where the calculation is finished, the process proceeds to step S2, and in a case where there are non-calculated cases, the process proceeds to step S4.

In step S4, in the cross-section, the renewable energy resources correction factor, which is regarding what type of the frequency change occurs within an independent system area in a case where the separate system (independent system) is generated by the assumed fault, and how much the frequency bottom or peak value is corrected by the virtual inertia (VI) control of the renewable energy resources power supply, is computed by the frequency analysis.

By repeating steps S2 to S4, the renewable energy resources correction factor for the operating state of the renewable energy resources in each fault can be obtained.

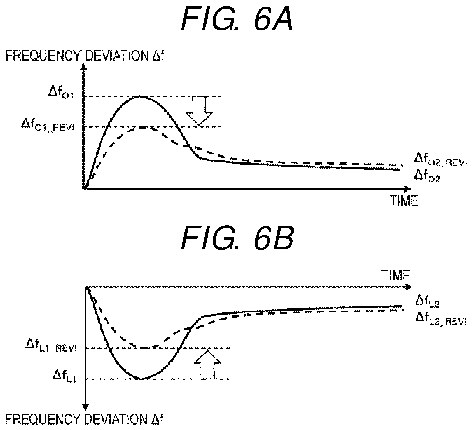

Here, the computation process of the renewable energy resources correction factor in steps S1 to S4 will be described with reference to FIGS. 6A and 6B. FIG. 6A illustrates the frequency deviation with or without the virtual inertia control of the renewable energy resources, in a case of power generation amount > load amount within the area when a certain separate system is generated. At this time, when the frequency deviation in a case where the frequency without the virtual inertia control of the renewable energy resources is a peak value is Δfₒ₁, and the frequency deviation when the frequency with the virtual inertia control is a peak value is Δf_{o1_REVI}, the renewable energy resources correction factor is (Δf_{o1_REVI}) / (Δfₒ₁). Further, the settling frequency without the virtual inertia control of the renewable energy resources is Δfₒ₂, and the settling frequency with the virtual inertia control is Δf_{o2_REVI}. In addition, FIG. 6B illustrates the frequency deviation with or without the virtual inertia control of the renewable energy resources, in a case of power generation amount < load amount within the area when a certain separate system is generated. At this time, when the frequency deviation in a case where the frequency without the virtual inertia control of the renewable energy resources is a bottom value is Δf_{L1}, and the frequency deviation when the frequency with the virtual inertia control is a bottom value is Δf_{L1_REVI}, the renewable energy resources correction factor is (Δf_{L1_REVI}) / (Δf_{L1}). Further, the settling frequency without the virtual inertia control of the renewable energy resources is Δf_{L2}, and the settling frequency with the virtual inertia control is Δf_{L2_REVI}. Although the correction factor is used here, the correction amount may also be used.

Since the renewable energy resources correction factor changes depending on the renewable energy resources operation status, the renewable energy resources correction factor is calculated for each renewable energy resources operation status (for example, a system non-synchronous penetration (SNSP) value, which is a system non-synchronous penetration of the power supply operation with respect to the renewable energy resources output state or demand), and a relational expression is calculated and set at a certain cycle or at any timing of the operator. Accordingly, there is an effect that the calculation of the predicted frequency computation is possible at a realistic speed in step S7. It is needless to say that, in a case where the number of computation targets is small or the computation capacity of the server is high, steps S1 to S4 and S5 to S8 can also be computed at the same cycle. The relational expression may be set as an approximate expression by linear regression or the like. Accordingly, there is an effect that the correction frequency can be easily obtained in the next step. By obtaining the peak or bottom frequency and the settling frequency, it becomes easy to determine whether the frequency is within the specified value or out of the specified value, whether or not the control is necessary, and whether the control is in the main control or the correction control. By making it possible to display these on the screen, there is an effect that the operator can easily grasp the influence and effect of the virtual inertia control.

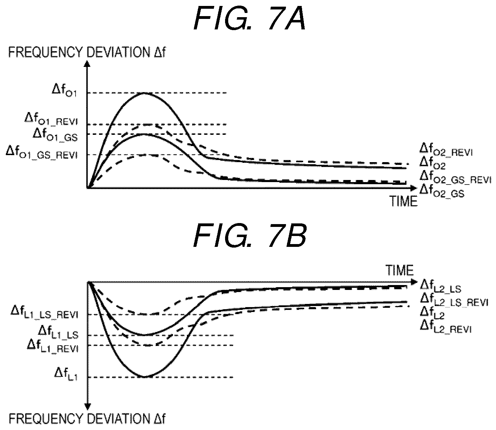

Although not illustrated in FIGS. 3, 4, and 5, when the control (generator shedding or load shedding) obtained by calculating the stabilization control amount computed in step S8 is performed, the renewable energy resources correction factor may further be recalculated. By using FIGS. 7A and 7B, in this case, the computation process of the renewable energy resources correction factor in steps S1 to S4 will be described with reference to FIG. 6.

When describing points other than those described in FIGS . 6A and 6B, FIG. 7A illustrates the frequency deviation with or without the virtual inertia control of the renewable energy resources when the generator shedding is performed, in a case of power generation amount > load amount within the area when a certain separate system is generated. At this time, when the frequency deviation in a case where the frequency without the virtual inertia control of the renewable energy resources is a peak value is Δf_{o1_GS}, and the frequency deviation when the frequency with the virtual inertia control is a peak value is Δf_{o1_GS_REVI}, the renewable energy resources correction factor is (Δf_{o1_GS}) - (Δf_{o1_GS_REVI}) / (Δf_{o1_GS}). Further, the settling frequency without the virtual inertia control of the renewable energy resources is Δf_{o2_GS}, and the settling frequency with the virtual inertia control is Δf_{o2_GS_REVI}.

In addition, FIG. 7B illustrates the frequency deviation with or without the virtual inertia control of the renewable energy resources when the load shedding is performed, in a case of power generation amount < load amount within the area when a certain separate system is generated. At this time, when the frequency deviation in a case where the frequency without the virtual inertia control of the renewable energy resources is a bottom value is Δf_{L1_LS}, and the frequency deviation when the frequency with the virtual inertia control is a bottom value is Δf_{L1_LS_REVI}, the renewable energy resources correction factor is (Δf_{L1_LS_REVI}) / (Δf_{L1_LS}) . Further, the settling frequency without the virtual inertia control of the renewable energy resources is Δf_{L2_LS}, and the settling frequency with the virtual inertia control is Δf_{L2_LS_REVI}. By using this calculation result, there is an effect that the predicted frequency computation accuracy in a case where the generator shedding or the load shedding is performed is improved, and an appropriate main control can be performed.

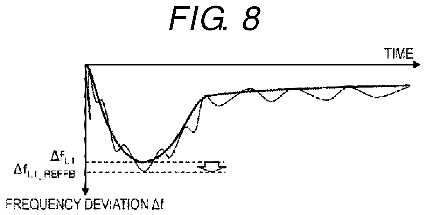

FIG. 8 illustrates an example of obtaining the renewable energy resources correction factor based on the frequency change at the time of generation of the separate system in which the renewable energy resources to which the frequency feedback function is added as the independent operation detection function is introduced. When describing points other than those described in FIG. 6, the frequency deviation is illustrated with or without the frequency feedback function of the renewable energy resources, in a case of power generation amount < load amount within the area when a certain separate system is generated. At this time, when the frequency deviation in a case where the frequency without the frequency feedback function is a bottom value is Δf_{L1}, and the frequency deviation in a case where the frequency with the frequency feedback function is a bottom value is Δf_{L1}__{REFFB}, the renewable energy resources correction factor is (Δf_{L1_REFFB}) / (Δf_{L1}). By using this calculation result, there is an effect that the predicted frequency computation accuracy in a case where the frequency feedback function is added is improved, and an appropriate main control can be performed. The renewable energy resources correction factors of FIGS. 6A, 6B, 7A, 7B and 8 can also be obtained at the same time. When setting the renewable energy resources model of the separate system area, by setting each of the control models, it becomes possible to perform the predicted frequency computation with any accuracy.

Up to this point, the virtual inertia control or the frequency feedback function was exemplified as control for the renewable energy resources model, but in addition to this, the P-axis and Q-axis control systems for renewable energy resources can be employed as factors that influence the separate system frequency. For example, in a case where the renewable energy resources power supply is large within the separate system, the system voltage changes greatly depending on which of AVR, AQR, and ApfR operations is employed, whether the capacity limiter control system at the time of voltage drop is Ip priority or Iq priority, which parameter value is set, and the like. When the system voltage changes, the load amount changes depending on the voltage characteristics of the load, and thus, the demand and supply balance changes, and the frequency deviation also changes. Therefore, as the renewable energy resources model, the renewable energy resources correction factor in step S4 may be calculated in consideration of the control model that affects the voltage.

Here, the process for computation of a predicted frequency with renewable energy resources correction and the stabilization control amount calculation/setting process in steps S5 to S8 will be described with reference to FIG. 4.

In step S5, the system measurement data (including power supply state and interconnection power flow) is acquired at a certain cycle, and the process proceeds to step S6. Here, although not illustrated in the drawing, the assumed fault data included in the set value data is also read. Here, it is expected that the output of the synchronous generator and the renewable energy resources power supply changes during a certain cycle, and the output predicted value of the renewable energy resources may be acquired from the predicted value of the power generation plan, the wind condition, or the amount of solar radiation, and may be used. By acquiring these, it is possible to accurately perform stabilization control even in a case where the separate system fault occurs, when the output of the synchronous generator or the renewable energy resources power supply changes during a certain cycle.

In step S6, it is determined whether or not all the assumed fault data of the system were calculated, and in a case where the calculation is finished, the process is completed, and in a case where there are non-calculated cases, the process proceeds to step S7.

In step S7, the frequency bottom or peak value in the predicted frequency computation is corrected and computed by using the renewable energy resources correction factor, based on the renewable energy resources correction factor and one or more of the renewable energy resources model/system equipment/system measurement value/set value data, and the process proceeds to step S8. Here, when the predicted frequency peak at the time of occurrence of a certain assumed fault is Δfₒ₁', the predicted frequency peak in a case where the renewable energy resources are not considered is Δfₒ₁, and the renewable energy resources correction factor is α_{RE}, Δfₒ₁' = α_{RE} × Δfₒ₁. When the predicted frequency bottom at the time of occurrence of an assumed fault is Δf_{L1}', the predicted frequency peak in a case where the renewable energy resources are not considered is Δf_{L1}, and the renewable energy resources correction factor is α_{RE}, Δf_{L1}' = α_{RE} × Δf_{L1}. These are called predicted frequencies with renewable energy resources correction.

In step S8, it is determined whether or not the predicted frequency with renewable energy resources correction, which is the frequency peak or bottom at the time of occurrence of an assumed fault in the measurement section obtained in step S7, is within an allowable range. In a case where the predicted frequency is out of the range, based on one or more of the renewable energy resources model/system equipment/system measurement value/set value data, the control amount in consideration of the influence of the renewable energy resources in the separate system is computed and set. In a case where the predicted frequency is within the range, the control amount is not computed, the set value is set as the zero control amount, and the process returns to step S6.

Here, the control target determination/command process in steps S9 to S13 will be described with reference to FIG. 5.

In step S9, it is determined whether or not the assumed fault of the system is generated based on the fault relay information and the set value data. The line route disconnection fault or the like at the root where the separate system is generated in FIG. 1 is registered. In a case where the assumed fault is generated, the process proceeds to step S10. In a case where the assumed fault is not generated, the process proceeds to step S12.

In step S10, the control amount is read using the information in the control table set in step S8, and the process proceeds to step S11.

In step S11, based on the control amount and one or more of the system equipment (including the control target data) /system measurement value (including the interconnection power flow)/set value data, the minimum control target equipment that exceeds the control amount is determined, and the generator shedding or the load shedding is commanded. Here, the control target equipment may be selected according to a separately set priority order, or may be rotated to ensure fairness.

In step S12, it is determined whether or not a predetermined cycle elapsed, and in a case where the predetermined cycle elapsed, steps S5 to S8 for calculating and setting the stabilization control amount are performed. In a case where the predetermined cycle did not elapse, the fault relay information is monitored to check whether or not there is a trigger for the occurrence of an assumed fault case.

In this manner, by issuing a control command at the occurrence of a fault, it becomes possible to stabilize the frequency and reduce the control amount when the supply-demand imbalance due to a system fault occurs.

Although the frequency stabilization control up to this point was described only for the first stage control (main control), the control may be combined with the correction control method of the related art. The correction control is often performed based on the post-measurement value, but the present patent can be applied as the main control. In this manner, there is an effect that it becomes easy to extend and apply the algorithm of the frequency stabilization system which was conventionally applied.

As described above, the power system stabilizer 10 disclosed in the example includes: the renewable energy resources correction factor computation unit 11 as a correction data generation unit that pre-generates correction data related to prediction of a frequency of a power system including a renewable energy resources power supply, based on a renewable energy resources power supply model that models an output of the renewable energy resources power supply and control system data of the renewable energy resources power supply; the unit for computing a predicted frequency with renewable energy resources correction 12 as a predicted frequency generation unit that generates a frequency at the time of occurrence of an accident as a predicted frequency using the correction data; and the stabilization control amount computation/setting unit 13 as a control amount computation unit that computes a control amount with respect to the power system using the predicted frequency that corresponds to the occurred accident at the time of occurrence of an accident.

According to this configuration, the power system stabilizer 10 can stabilize the frequency of the power system including the renewable energy resources power supply.

The unit for computing a predicted frequency with renewable energy resources correction 12 periodically generates and updates the predicted frequency, and the stabilization control amount computation/setting unit 13 computes the control amount using the latest predicted frequency at the time of occurrence of the accident. Therefore, the main control (first stage control) can be performed in consideration of the control performed with respect to the renewable energy resources.

Here, the renewable energy resources correction factor computation unit 11 may generate the correction data at a cycle according to the generation of the predicted frequency, and the unit for computing a predicted frequency with renewable energy resources correction 12 may generate the predicted frequency using the latest correction data.

In addition, the renewable energy resources correction factor computation unit 11 may generate the correction data at a timing different from that of the generation of the predicted frequency, and the unit for computing a predicted frequency with renewable energy resources correction 12 may generate the predicted frequency using the pre-generated correction data.

When the correction data is obtained in the same cycle as that of the predicted frequency, the correction can be performed using new information as much as the predicted frequency. Meanwhile, when the correction data is generated at a timing independent of the generation cycle of the predicted frequency, it is possible to ensure a sufficient computation time and accurately obtain the correction data.

The renewable energy resources correction factor computation unit 11 computes and obtains a correction factor with respect to the predicted frequency depending on presence or absence of control of one or more of a virtual inertia function, a frequency feedback function, a voltage control function, a reactive power control function, and a power factor control function of the renewable energy resources power supply, with respect to a frequency change in a separate system in a case where an assumed fault occurs, based on one or more of a system measurement value measured by the renewable energy resources power supply model, system equipment installed in the power system, and the power system, and a set value related to control of the power system. Therefore, the correction factor that corresponds to the state of the renewable energy resources and the power system can be obtained as the correction data.

The unit for computing a predicted frequency with renewable energy resources correction 12 computes a predicted frequency when adding control of one or more of a virtual inertia function, a frequency feedback function, a voltage control function, a reactive power control function, and a power factor control function of the renewable energy resources, by computing the predicted frequency based on one or more of the correction data, the system measurement value measured by the renewable energy resources power supply model, system equipment installed in the power system, and the power system, and a set value related to control of the power system. Therefore, the predicted frequency that corresponds to the state of the renewable energy resources and the power system can be obtained.

The stabilization control amount computation/setting unit 13 computes a control amount in consideration of an influence of the renewable energy resources power supply in the separate system, based on one or more of the predicted frequency, the system measurement value measured by the renewable energy resources power supply model, system equipment installed in the power system, and the power system, and a set value related to control of the power system. Therefore, the control amount that corresponds to the state of the renewable energy resources and the power system can be obtained.

There is further provided the control target determination/control command unit 15 as a control command unit that calculates minimum generator shedding or load shedding target that exceeds the control amount, and issues a command, based on the control amount computed by the stabilization control amount computation/setting unit 13, the state of the power system, and information on the occurred accident. Therefore, control that corresponds to the state of the renewable energy resources and the power system can be executed.

By providing the display unit 41 that displays information on one or more of the correction data, the predicted frequency, the control amount, and control of the power system, on a screen, it is possible to provide various information to the operator of the power system stabilizer 10.

The present invention is not limited to the above-described embodiments, and includes various modification examples. For example, the above-described embodiments are examples which are described in detail in order to make it easy to understand the present invention, and are not limited to a case where all of the described configurations are necessarily provided. In addition, a part of the configuration of a certain embodiment can be replaced with the configuration of the other embodiment, and the configuration of the other embodiment can be added to the configuration of a certain embodiment. It is also possible to add, remove, or replace other configurations with a part of the configuration of each embodiment. In addition, each of the above-described configurations, functions, processing units, and the like may be realized by hardware, for example, by designing a part or all of these with an integrated circuit.

## Claims

1. A power system stabilizer comprising:
a correction data generation unit that pre-generates correction data related to prediction of a frequency of a power system including a renewable energy resources power supply, based on a renewable energy resources power supply model that models an output of the renewable energy resources power supply and control system data of the renewable energy resources power supply;
a predicted frequency generation unit that generates a frequency at the time of occurrence of an accident as a predicted frequency using the correction data; and
a control amount computation unit that computes a control amount with respect to the power system using the predicted frequency that corresponds to the occurred accident at the time of occurrence of an accident.

2. The power system stabilizer according to claim 1, wherein
the predicted frequency generation unit periodically generates and updates the predicted frequency, and
the control amount computation unit computes the control amount using the latest predicted frequency at the time of occurrence of the accident.

3. The power system stabilizer according to claim 2, wherein
the correction data generation unit generates the correction data at a cycle according to generation of the predicted frequency, and
the predicted frequency generation unit generates the predicted frequency using the latest correction data.

4. The power system stabilizer according to claim 2, wherein
the correction data generation unit generates the correction data at a timing different from that of generation of the predicted frequency, and
the predicted frequency generation unit generates the predicted frequency using the pre-generated correction data.

5. The power system stabilizer according to claim 1, wherein
the correction data generation unit computes and obtains a correction factor with respect to the predicted frequency depending on presence or absence of control of one or more of a virtual inertia function, a frequency feedback function, a voltage control function, a reactive power control function, and a power factor control function of the renewable energy resources power supply, with respect to a frequency change in a separate system in a case where an assumed fault occurs, based on one or more of a system measurement value measured by the renewable energy resources power supply model, system equipment installed in the power system, and the power system, and a set value related to control of the power system.

6. The power system stabilizer according to claim 1, wherein
the predicted frequency generation unit computes a predicted frequency when adding control of one or more of a virtual inertia function, a frequency feedback function, a voltage control function, a reactive power control function, and a power factor control function of the renewable energy resources power supply, by computing the predicted frequency based on one or more of the correction data, a system measurement value measured by the renewable energy resources power supply model, system equipment installed in the power system, and the power system, and a set value related to control of the power system.

7. The power system stabilizer according to claim 1, wherein
the control amount computation unit computes a control amount in consideration of an influence of the renewable energy resources power supply in the separate system, based on one or more of the predicted frequency, a system measurement value measured by the renewable energy resources power supply model, system equipment installed in the power system, and the power system, and a set value related to control of the power system.

8. The power system stabilizer according to claim 1, further comprising:
a control command unit that calculates minimum generator shedding or load shedding target that exceeds the control amount, and issues a command, based on the control amount computed by the control amount computation unit, the state of the power system, and information on the occurred accident.

9. The power system stabilizer according to claim 1, further comprising:
a display unit that displays information on one or more of the correction data, the predicted frequency, the control amount, and control of the power system, on a screen.

10. A power system stabilization method comprising:
a correction data generation step of pre-generating correction data related to prediction of a frequency of a power system including a renewable energy resources power supply, based on a renewable energy resources power supply model that models an output of the renewable energy resources power supply and control system data of the renewable energy resources power supply;
a predicted frequency generation step of generating a frequency at the time of occurrence of an accident as a predicted frequency using the correction data; and
a control amount computation step of computing a control amount with respect to the power system using the predicted frequency that corresponds to the occurred accident at the time of occurrence of an accident.
